# EUROPEAN PATENT SPECIFICATION

(11) **EP 2 363 191 B1**
(45) Date of publication and mention of the grant of the patent: **19.06.2013**
(21) Application number: 11250165.5
(22) Date of filing: 11.02.2011
(51) Int. Cl.: B01D 39/20, B01D 46/00, B01D 46/24

(54) **Method for manufacturing honeycomb filter**
Verfahren zur Herstellung eines Wabenfilters
Procédé de fabrication de filtre en nid d'abeille

(30) Priority: 15.02.2010 JP 2010030595
(43) Date of publication of application: 07.09.2011
(73) Proprietor: NGK Insulators, Ltd., Nagoya-City, Aichi Pref. 467-8530 (JP)
(72) Inventor: Watanabe, Tsuyoshi, Nagoya City Aichi-ken 467-8530 (JP)
(74) Representative: Paget, Hugh Charles Edward

(56) References cited:
- DE-A1-102010 008 969
- JP-A- 10 263 340
- US-A1- 2004 176 246

## Description

### Background of the Invention and Related Art Statement

The present invention relates to a method for manufacturing a honeycomb filter for trapping particulate matter contained in exhaust gas.

In consideration of influences on the environment, the need for removing particulate matter contained in exhaust gas discharged from internal combustion engines such as a vehicle engine, a construction machine engine, and an industrial machine stationary engine, other burning appliances, and the like is increasing. In particular, regulations relating to removal of particulate matter (hereinbelow sometimes referred to as "PM") discharged from a diesel engine tend to be strengthened on a global basis. From such circumstances, attention is paid to a DPF (diesel particulate filter) for trapping and removing the PM.

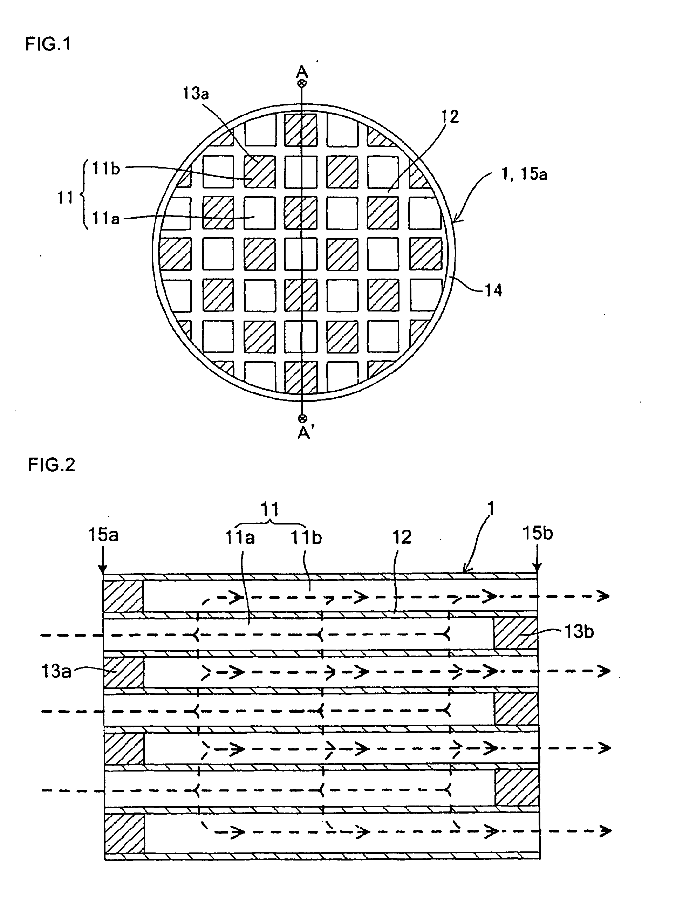

One embodiment of a DPF is a honeycomb filter 1 provided with porous partition walls 12 separating and forming a plurality of cells 11 functioning as exhaust gas flow passages and having a large number of pores formed therein and plugging portions 13a arranged in the outflow end portions 15b of the exhaust gas inflow cells 11a and in the inflow endportions 15a of the exhaust gas outflow cells 11b adjacent to the inflow cells 11a among the cells 11 as shown in Figs. 1 and 2. In such a honeycomb filter 1, exhaust gas flowing in from the inflow end portions 15a where the inflow cells 11a are open passes through the partition walls 12, flows into the outflow cells 11b, and is discharged from the outflow end portions 15b where the outflow cells 11b are open, thereby trapping and removing PM in the exhaust gas due to the partition walls 12. In such a filter having a structure where exhaust gas passes through the porous partition walls 12 (wall flow type filter), since a filtration area can be secured widely, a filtration flow rate (partition wall transmission flow rate) can be reduced to have small pressure loss and relatively good PM-trapping efficiency.

Since a DPF has such a structure as described above, when trapping of PM is started in a clean state without deposition of PM or the like, PM deposits in the pores inside the partition walls, which may rapidly increase pressure loss. Such rapid increase in pressure loss may become a major factor of deterioration of engine performance. In order to solve the problem and in order to enhance the PM-trapping efficiency, there has been proposed a honeycomb filter having a trapping layer fixed on the surfaces of the partition wall by sending ceramic particles into the cells with gas (see, e.g., JP-A-2006-685).

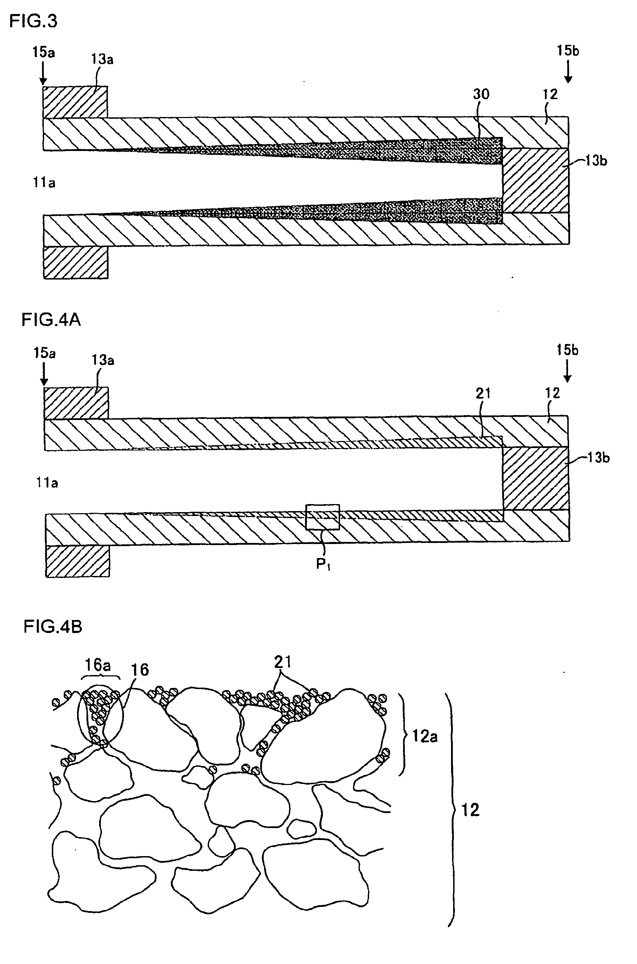

However, since a pressure distribution is generated by an air current and since ceramic particles themselves have an inertia force when gas containing ceramic particles is sent into the cells, as shown in Fig. 3, ceramic particles easily deposit in the pores of the partition walls in the outflow end portions 15b of the inflow cells 11a and further on the surfaces of the partition walls 12. As the results, the membrane thickness of the resultant trapping layers 30 becomes nonuniform, i.e., small in the inflow end portions 15a and large in the outflow end portions 15b to have a problem of difficulty in forming a trapping layer having a small and uniform thickness.

In order to solve the problem, for example, JP-A-10-263340 discloses formation of a uniform trapping layer by inserting a divider and a brush into a cell, sending ceramic particles with gas into a circular cylindrical portion partitioned by two dividers, and sweeping the surface of the partition walls with the brush. However, in the case of a large number of small cells as in a DPF or the like, there is a problem of impractical formation of a uniform trapping layer according to such a method.

The document US 2004/176246 A1 teaches to coat the walls with help of a carrier gas stream.

### Summary of the Invention

The present invention has been made in view of such prior art problems and aims to provide a method for manufacturing a honeycomb filter which is provided with a trapping layer having a small and uniform thickness and which has excellent pressure loss properties.

As a result of the present inventors' earnest investigations in order to achieve the aforementioned aim, they found out that the aforementioned aim can be achieved by depositing the plugging material particles which burn away due to a thermal treatment in the pores in the surface layer portions of the partition walls to make the partition wall surfaces almost flat, then thinly and uniformly depositing membrane-forming particles thereon, and then burning away the plugging material particles due to the thermal treatment. The finding has lead to the completion of the present invention.

That is, according to the present invention, there is provided the following method for manufacturing a honeycomb filter.

A method for manufacturing a honeycomb filter, the method comprising: a first step of plugging openings of pores of a honeycomb-shaped substrate having porous partition walls separating and forming a plurality of cells functioning as exhaust gas fluid passages and having a large number of pores formed therein, and plugging portions disposed in end portions on one side of exhaust gas inflow cells among the cells and in end portions on the other side of exhaust gas outflow cells adjacent to the inflow cells by allowing first particles which burn away due to a thermal treatment to deposit in at least the pores open on the inflow cell side, a second step of allowing second particles for manufacturing a membrane to deposit on the partition walls where the opening of the pores are plugged, and a third step of subjecting the honeycomb-shaped substrate having the first and second particles depositing on the partition walls thereof to a thermal treatment; wherein a number average particle diameter of the first particles is at most an average pore size of the pores formed in the partition walls.

The method for manufacturing a honeycomb filter according to [1], wherein the number average particle diameter of the first particles is at most 0.50 times the average pore size of the pores formed in the partition walls.

The method for manufacturing a honeycomb filter according to [1], wherein the number average particle diameter of the first particles is 0.0007 to 0.50 times the average pore size of the pores formed in the partition walls.

According to a method for manufacturing a honeycomb filter of the present invention, there can be provided a method for manufacturing a honeycomb filter which is provided with a trapping layer having a small and uniform thickness and which has excellent pressure loss properties.

### Brief Description of the Drawings

Fig. 1 is a front (inflow end face) view schematically showing an embodiment of a conventional DPF.

Fig. 2 is a cross-sectional view schematically showing the A-A' cross-section of Fig. 1.

Fig. 3 is a cross-sectional view schematically showing an inflow cell of a honeycomb filter obtained by a conventional method for manufacturing a honeycomb filter.

Fig. 4A is a cross-sectional view schematically showing an inflow cell after being subjected to the step 1 in an embodiment of a method for manufacturing a honeycomb filter of the present invention.

Fig. 4B is an enlarged view of the P₁ portion of Fig. 4A.

Fig. 5A is a cross-sectional view schematically showing an inflow cell after being subjected to the step 2 in an embodiment of a method for manufacturing a honeycomb filter of the present invention.

Fig. 5B is an enlarged view of the P₂ portion of Fig. 5A.

Fig. 6A is a cross-sectional view schematically showing an inflow cell after being subjected to the step 3 in an embodiment of a method for manufacturing a honeycomb filter of the present invention.

Fig. 6B is an enlarged view of the P₃ portion of Fig. 6A.

### Reference Numerals

1: honeycomb filter, 11: cell, 11a: inflow cell, 11b: outflow cell, 12: partition wall, 12a: partition wall surface layer portion, 13a: plugging portion (inflow end portion), 13b: plugging portion (outflow end portion), 14: outer peripheral wall, 15a: inflowendportion, 15b: outflowendportion, 16: open pore, 16a: opening of open pore, 20: membrane-forming particles, 21: plugging material particles, 30, 40: trapping layer

### Detailed Description of the Invention

Hereinbelow, embodiments of the present invention will be described. However, the present invention is by no means limited to the following embodiments, and it should be understood that the present invention includes embodiments where changes, improvements and the like are suitably made on the following embodiments on the basis of the ordinary knowledge of a person of ordinary skill in the art within the range of not deviating from the gist of the present invention.

### 1: Method for manufacturing a honeycomb filter:

An embodiment of a method for manufacturing a honeycomb filter of the present invention is a manufacturing method where a honeycomb-shaped substrate is subj ected to the steps 1 to 3. Hereinbelow, the details will be described.

### 1-1. Manufacture of honeycomb-shaped substrate:

The honeycomb-shaped substrate of the present embodiment can be manufactured by the following method. In the first place, framework particles of a ceramic or the like shown below, water, a pore former, and the like are mixed together, and the mixture is kneaded to obtain kneaded clay. Next, the kneaded clay is formed into a desired honeycomb shape due to extrusion forming or the like and then dried to obtain a honeycomb formed article. Next, plugging portions are formed in one of the end portions of the predetermined cells of the honeycomb formed article. Finally, firing is performed to obtain a honeycomb-shaped substrate having porous partition walls separating and forming a plurality of cells which function as exhaust gas flow passages and having a large number of pores, and plugging portions disposed in end portions on one side of exhaust gas inflow cells among the cells and in end portions on the other side of exhaust gas outflow cells adjacent to the inflow cells.

In addition, there is no particular limitation on the material for the honeycomb-shaped substrate of the present embodiment, and conventionally known materials can be used. Among the materials, ceramics such as cordierite, silicon carbide (SiC), Si-SiC, alumina, mullite, aluminum titanate, and silicon nitride are preferable, and Si-SiC, cordierite, aluminum titanate, and the like are particularly preferable.

The porosity of the partition walls of the honeycomb-shaped substrate is preferably 35 to 75%. When the porosity of the partition walls is below 35%, since permeation resistance of the partition walls upon filtering exhaust gas remarkably rises, pressure loss in a state without PM deposition increases to a large extent. On the other hand, when the porosity is above 75%, strength of the honeycomb-shaped substrate falls, and a crack may be generated upon canning.

The average pore size of the pores formed in the partition walls of a honeycomb-shaped substrate is preferably 5 to 40 µm. When the average pore size of the pores is below 5 µm, since permeation resistance of the partition walls upon filtering exhaust gas remarkably rises, pressure loss in a state without PM deposition increases to a large extent. On the other hand, when the average pore size of the pores is above 40 µm, the amount of PM passing through the partition walls increases to a large extent, and the filtering performance may deteriorate.

### 1-1-1. Preparation of kneaded clay:

The kneaded clay can be prepared by mixing framework particles of a ceramic or the like described above; water as a dispersion medium, a pore former such as graphite, starch, or synthetic resin, and the like, and kneading the mixture. In addition, with the kneaded clay, an organic binder, a dispersant, and the like may further be mixed arbitrarily.

As the framework particles, there may be employed, for example, a mixture of a SiC powder and a metal Si powder mixed at a mass ratio of, for example, 80 : 20 when a Si-SiC honeycomb-shaped substrate is manufactured; and, for example, a cordierite-forming raw material or the like containing a plurality of inorganic raw materials selected from the group consisting of talc, kaolin, calcined kaolin, alumina, aluminum hydroxide, and silica so as to have a chemical composition of, for example, silica of 42 to 56 mass%, alumina of 30 to 45 mass%, and magnesia of 12 to 16 mass% when a cordierite honeycomb-shaped substrate is manufactured.

There is no particular limitation on the pore former as long as it flies apart or burns away by the firing (calcination) step, and conventionally known pore formers may be used. Specific examples of the pore formers include inorganic substances such as coke, polymer compound such as resin balloons, and organic substance such as starch. Incidentally, these pore formers may be used alone or as a combination of two or more kinds.

Specific examples of the organic binder include hydroxypropylmethyl cellulose, methyl cellulose, hydroxyethyl cellulose, carboxylmethyl cellulose, and polyvinyl alcohol. These organic binders may be used alone or as a combination of two or more kinds.

Specific examples of the dispersant include ethylene glycol, dextrin, fatty acid soap, and polyalcohol. These dispersants may be used alone or as a combination of two or more.

There is no particular limitation on a method for kneading a mixture of the aforementioned materials, and a conventionally known method may be employed. For example, a method using a kneader, a vacuum kneader, or the like may be employed.

### 1-1-2. Formation:

There is no particular limitation on the method for forming a honeycomb formed article, and a conventionally known method may be employed. For example, methods such as extrusion forming, injection forming, press forming, and the like may be employed. Of these, particularly preferable is a method of subjecting kneaded clay prepared as described above to extrusion forming using a die having a desired cell shape, partition wall thickness, and cell density.

There is no particular limitation on the entire shape of the honeycomb formed article, and a conventionally known shape may be employed. For example, shapes such as a circular columnar (circular cylindrical) shape, an elliptic columnar shape, a quadrangular prism shape, and a triangular prism shape may be employed.

There is no particular limitation on the cell structure of a honeycomb formed article. The cell density of the honeycomb-shaped substrate is preferably 0.9 to 233 cells/cm², and the partition wall thickness of honeycomb-shaped substrate is preferably 100 to 600 µm. When the partition wall thickness is below 100 µm, a crack may be caused upon regeneration of the DPF. On the other hand, when the partition wall thickness is above 600 µm, the cell has a small equivalent hydraulic diameter, and the pressure loss may increase.

There is no particular limitation on the cell shape of the honeycomb formed article, and a conventionally known shape may be employed. For example, cell shapes having cross sectional shapes of a quadrangle, a hexagon, an octagon, and a triangle may be employed. In addition, in the honeycomb formed article, plural kinds of cell shapes having different cross sections or sizes may be formed.

### 1-1-3. Plugging:

The plugging portions of the honeycomb-shaped substrate of the present embodiment can be formed by, for example, immersing a honeycomb formed article having a mask on the cells where no plugging portion is formed in stored plugging material slurry for the aimed thickness of the plugging portions to fill the plugging material slurry into the plugging cells. Incidentally, after the plugging material slurry is filled into the cells to be plugged, generally, the honeycomb formed article is lifted out and dried, and the mask is removed. In addition, in the same manner, plugging portions can be formed at the end portions on the other side of the masked cells.

As the plugging material, the same material as the material for the honeycomb formed article is generally used. By using the same material as the material for the honeycomb formed article, the plugging material and the honeycomb formed article can have the same expansion coefficient upon firing, thereby inhibiting crack generation and improving durability.

Incidentally, the plugging portions may be formed after drying or after drying and firing the honeycomb formed article by the method described below.

### 1-1-4. Firing:

The honeycomb-shaped substrate can be manufactured by finally subjecting the honeycomb formed article having the plugging portions formed therein to drying, calcining, and further firing.

There is no particular limitation on the drying method, and a conventionally known drying method can be employed. For example, hot air drying, microwave drying, dielectric drying, reduced pressure drying, vacuum drying, and freeze drying may be employed. Of these, in that the entire formed article can be dried quickly and uniformly, a drying method where hot air drying and microwave drying or dielectric drying are combined is preferable.

The calcination is performed in order to degreasing the organic substances such as an organic binder, a pore former, and a dispersant contained in the forming raw material (kneaded clay).

There is no particular limitation on the calcination conditions. For example, the conditions of 550°C for 3 hours in an ambient atmosphere may be employed. Incidentally, the calcination conditions may suitably be selected in accordance with the organic substances in the forming raw material (kneaded clay). Generally, combustion temperature of organic binders is about 100 to 300°C, and combustion temperature of pore formers is about 200 to 1000°C. Therefore, the calcination temperature can be 200 to 1000°C. In addition, the calcination time is generally about 3 to 100 hours.

The firing is performed in order to secure predetermined strength by sintering the framework particles and the like contained in the forming raw material (kneaded clay) for densification.

Since the firing conditions differ depending on the forming raw material (framework particles and the like in the forming raw material) and the like, the conditions may suitably be selected in accordance with the kind and the like of the forming raw material. For example, in the case of firing a SiC powder and a metal Si powder in an Ar inert atmosphere, the firing temperature is generally 1400 to 1500°C. In addition, for example, in the case of firing a cordierite forming raw material or an aluminum titanate raw material, the firing temperature is preferably 1410 to 1440°C, and the firing time is preferably about 3 to 10 hours.

A honeycomb filter manufactured by the method for manufacturing a honeycomb filter of the present embodiment may be a honeycomb filter with a catalyst loaded on the partition walls. There is no particular limitation on the method for loading a catalyst on the partition wall, and a conventionally known method can be employed. For example, a catalyst having amass ratio of alumina : platinum : ceria based material of 7 : 1 : 2 with the ceria based material having a mass ratio of Ce : Zr : Pr : Y : Mn of 60 : 20 : 10 : 5 : 5 can be loaded on the partition walls by dipping, suction, or the like. After that, for example, it is dried at 120°C for 2 hours and baked at 550°C for 1 hour to manufacture a honeycomb filter with a catalyst.

### 1-2. Step 1 (deposition of plugging material particles):

The step 1 is a step where the first particles (plugging material particles) burning away due to a thermal treatment are deposited in the open pores which are open on at least the inflow cell side of the surface layer portion on the inflow cell side of the partition walls of a honeycomb-shaped substrate to plug the openings of the open pores.

Fig. 4A is a cross-sectional view schematically showing a state of depositing plugging material particles in the open pores which are open on at least the inflow cell side of the surface layer portion on the inflow cell side of the partition walls of the honeycomb-shaped substrate in the step 1. In addition, Fig. 4B is an enlarged view of the P₁ portion in Fig. 4A. Hereinbelow, the step 1 will be described with referring to these figures.

In the present specification, the "surface layer portion on the inflow cell side of the partition walls" is a layered portion (portion shown by 12a) present on the inflow cell 11a side of the partition wall 12 as shown in Fig. 4B and having a thickness of 20% of that of the partition walls 12. Incidentally, it is known that, as in the step 1 of the present embodiment, when a solid-gas two-phase flow containing microparticles passes through a particle-shaped layer filter like the partition walls 12 of the honeycomb-shaped substrate,microparticles derail from the air current due to dispersion or a particle-trapping mechanism of interruption of microparticles to deposit in the surface layer portion 12a of the particle-shaped layer filter (Regarding the details of "particle-trapping mechanism of interruption", see "Y. Otani, et. al, "Aerosol Science and Technology 10:463 - 474 (1989)").

### 1-2-1. Plugging material particle:

There is no particular limitation on the plugging material particles 21 as long as the particles burn away due to a thermal treatment. Specific examples of the plugging material particles include carbon black particles, graphite powder particles, acryl microparticles, starch particles, polyethylene particles, polypropylene particles, nylon particles, coke particles, cellulose particles, powder sugar, and phenol particles. Of these, in view of easy conditions for the thermal treatment for burning away the plugging material in the following step 3 (thermal treatment), easy treatment of the gas generating due to the thermal treatment, easy procurement, high cost-efficiency, and the like, carbon black particles, graphite powder particles, acryl microparticles, starch particles, polyethylene particles, polypropylene particles, nylon particles, and coke particles are preferable, and carbon black particles, graphite powder particles, acryl microparticles, and starch particles are particularly preferable. Incidentally, here, "easy conditions for the thermal treatment" means conditions where thermal treatment temperature is not high and where no particular equipment, apparatus, and the like is required because, for example, the atmosphere for the thermal treatment is an ambient atmosphere.

There is no particular limitation on the number average particle diameter of the plugging material particles 21 as long as the diameter is not larger than the average pore size of the pores formed in the partition walls 12 of the honeycomb-shaped substrate, and the aforementioned "particles burning away due to a thermal treatment" can be used. Since the number average particle diameter of the plugging material particles 21 is not larger than the average pore size of the pores, many plugging material particles 21 can enter the open pores 16 of the partition walls 12. However, practically, the lower limit of the number average particle diameter of the plugging material particles 21 is 0.01 µm (when the average pore size of the pores is 14 µm, it is 0.0007 times the average pore size), which is the minimum number average particle diameter of the "particles burning away due to a thermal treatment" which can be manufactured at present.

In addition, the number average particle diameter of the plugging material particles 21 is particularly preferably not larger than 0.50 times the average pore diameter of pores. By setting the number average particle diameter of the plugging material particles 21 to be not larger than 0. 50 times the average pore diameter of the pores, the plugging material particles 21 easily enter the open pores 16 of the partition walls 12 and easily deposit on the internal surface of the pores of the partition walls 12. On the other hand, when the number average particle diameter of the plugging material particles 21 is too small with respect to the average pore size of the pores, it is predicted that the plugging material particles 21 pass through the pores of the partition walls 12 and are discharged to the outflow cell 11b side to make deposition in the pores of the partition walls 12 difficult. However, it has been confirmed that even the plugging material particles 21 having a number average particle diameter of 0.0007 times the average pore size of the pores has an effect in plugging the open pores 16 of the partition walls 12.

### 1-2-2. Deposition:

There is no particular limitation on the method for depositing the plugging material particles 21, and a conventionally known method can be employed. Above all, preferable is a method where a solid-gas two-phase flow containing the plugging material particles 21 is splayed with an ejector or the like to allow the particles to flow into the inflow cells 11a of the honeycomb-shaped substrate for deposition. At this time, it is also preferable that air discharged to the outflow end 15b side is sucked to introduce the plugging material particles 21 into the open pores 16 of the partition walls 12 for deposition.

Since the pressure distribution is caused by the air current when a solid-gas two-phase flow is allowed to flow into the inflow cells 11a, the plugging material particles 21 themselves have an inertia force, and therefore the plugging material particles 21 deposit nonuniformly, i.e., thinly in the inflow end portion 15a and thickly in the outflow end portion 15b. However, by optimally setting the average pore size of the pores of the partition walls 12, number average particle diameter of the plugging material particles 21, spray amount, spray conditions, suction conditions, and the like, the plugging material particles 21 are deposited in at least the open pores 16 to plug the openings 16a of the open pores 16, and thereby the surfaces of the partition walls 12 can be made almost flat. This enables to deposit the membrane-forming particles 20 thinly and uniformly in the step 2 described below.

In addition, when the plugging material particles 21 are mixed with air, that is, when a solid-gas two-phase flow is obtained, the plugging material particles 21 in a fluidized state can be used. By using the plugging material particles 21 in a fluidized state, aggregation of the plugging material particles 21 can be inhibited, and clogging of the pores can be inhibited. In addition, it is also possible to deposit the plugging material particles 21 by generating a fluidized layer of the plugging material particles 21 upstream of the honeycomb-shaped substrate without spraying the plugging material particles 21 in a fluidized state and sucking from the downstream.

1-3. Step2 (Deposition of membrane-forming particles):
The step 2 is for depositing membrane-forming particles on the surfaces of the partition walls where the openings of the open pores are plugged in the step 1.

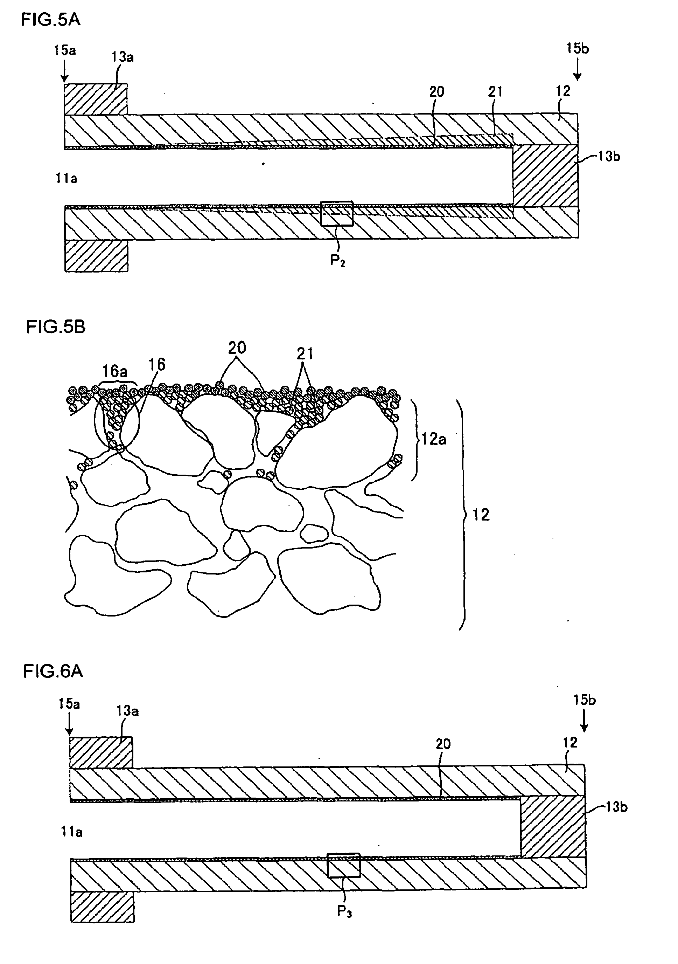

Fig. 5A is a cross-sectional view schematically showing a state of further depositing the membrane-forming particles on the partition walls where the openings of the open pores are plugged in the step 1. In addition, Fig. 5B is an enlarged view of the P₂ portion of Fig. 5A. Hereinbelow, the step 2 is described with referring to these figures.

There is no particular limitation on the method for depositing the membrane-forming particles 20 as long as the method can deposit the membrane-forming particles 20 thinly and uniformly, and the same method as the method for depositing the plugging material particles 21 described above can be employed. Incidentally, the method for depositing the membrane-forming particles 20 may be the same as or different from the method for depositing the plugging material particles 21.

### 1-3-1. Membrane-forming particle:

As the material for the membrane-forming particles 20, ceramic is preferable. Specific examples of the material for the membrane-forming particles 20 include oxide based ceramics such as cordierite, aluminum titanate, mullite, alumina, zirconia, titania, spinel, zirconium phosphate, aluminum titanate, and Ge-cordierite and nonoxide based ceramics such as SiC and Si₃N₄.

Further, the material for the membrane-forming particles 20 is preferably the same as that for the honeycomb-shaped substrate. That is, it is preferable to use a pulverized product of a honeycomb-shaped substrate, a further pulverized product of a processed powder generated upon the cutting work in the process of manufacturing a honeycomb-shaped substrate, or the like as the membrane-forming particles 20. By using such membrane-forming particles 20, the honeycomb-shaped substrate and the trapping layer have the same thermal expansion coefficient to be able to inhibit exfoliation of the trapping layers from the partition walls 12. In addition, as the membrane-forming particle 20, framework particles which are the raw material for the honeycomb-shaped substrate may be used with no change.

Incidentally, there is no particular limitation on the method for the pulverization, and a conventionally known pulverizing method can be employed. However, wet pulverization is preferable. By the wet pulverization, the membrane-forming particles 20 having a uniform particle diameter can be formed, and aggregation of the membrane-forming particles 20 can be inhibited.

Though there is no particular limitation on the number average particle diameter of the membrane-forming particles 20, it is generally 0.1 to 50 µm, preferably 0.5 to 20 µm, and further preferably 1 to 15 µm. When the number average particle diameter of the membrane-forming particles 20 is below 0.1 µm, since the average pore size when the trapping layer is formed is too small, pressure loss tends to be too large because the air current passages becomes narrow. On the other hand, when the number average particle diameter of the membrane-forming particles 20 is above 50 µm, since the average pore size when the trapping layer is formed is too large, PM easily passes, and it may be impossible to obtain the original function of the trapping layer.

### 1-4. Step 3 (thermal treatment):

The step 3 is a step of burning away the plugging material particles by subjecting the honeycomb-shaped substrate where the plugging material particles and the membrane-forming particles are deposited on the partition walls.

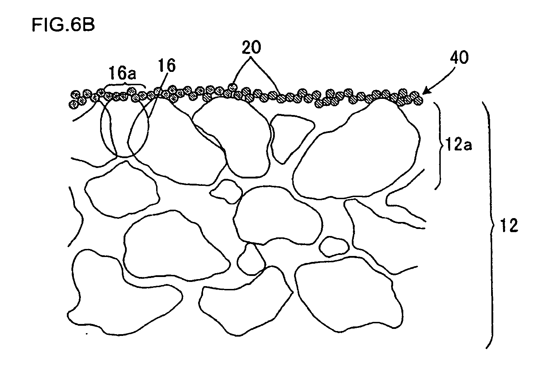

Fig. 6A is a cross-sectional view schematically showing a state after the plugging material particles are burnt away by subjecting the honeycomb-shaped substrate where the plugging material particles and the membrane-forming particles are deposited on the partition walls to a thermal treatment in the step 3. In addition, Fig. 6B is an enlarged view of the P₃ portion of Fig. 6A. Hereinbelow, the step 3 will be described with referring to these figures.

Since the plugging material particles 21 burn away due to a thermal treatment, a thin and uniform layer of the membrane-forming particles 20 is formed on the surfaces of the partition walls 12. Generally, by the subsequent firing, sintering is caused among the membrane-forming particles 20 and between the membrane-forming particles 20 and the partition walls 12 to be able to form a thin and uniform trapping layer 40.

Though there is no particular limitation on the conditions for the thermal treatment as long as the plugging material particles 21 burns away under the conditions, they are generally 200 to 1000°C for about 0. 5 to 100 hours in an ambient atmosphere. Incidentally, the temperature for the thermal treatment may suitably be selected depending on the kind of the plugging material particles 21. For example, in the case of carbon black particles or graphite powder particles, the temperature may be about 800°C, and, in the case of acryl microparticles or starch particles, the temperature may be about 500°C.

### Examples

Hereinbelow, the present invention will be described specifically on the basis of Examples. However, the present invention should not be limited to these Examples. In addition, measurement methods for various property values and evaluation methods for various properties are shown below.

### [Average pore size (µm) of pores]

The average pore size of the pores formed in the partition walls were measured by the mercury porosimetry using a mercury porosimeter produced by Shimadzu Corporation.

### [Average membrane thickness (µm) of trapping layer]

The "average membrane thickness (µm) of the trapping layer" was obtained by the following measurement method.

In the first place, a honeycomb filter was cut to have a length of 10%, 50%, and 90% of the entire length from one end face. In each of the three cross sections, three SEM images (nine in total) were taken under the conditions of 500 magnifications using a scanning electron microscope (trade name of "S-3200", produced by Hitachi, Ltd.). In each of the three SEM image taken in one cross section, the membrane thickness of the trapping layer was measured, and the average value of the membrane thicknesses (measured values) of the three trapping layers measured was obtained as the "membrane thickness of the trapping layer of the cross section". In the same manner, regarding the other cross sections, the "membrane thicknesses of the trapping layers of the cross sections" was obtained. The average value of the three "membrane thicknesses of the trapping layers of the cross sections" obtained above was defined as the "average membrane thickness (µm) of the trapping layers".

### [Maximum-minimum membrane thickness difference (µm) of trapping layer]

Among the three "membrane thicknesses of the trapping layers of the cross sections" obtained by the aforementioned method for measuring the "average membrane thickness (µm) of the trapping layer", the difference between the maximum "membrane thickness of the trapping layer of the cross section" and the minimum "membrane thickness of the trapping layer of the cross section" was defined as the "maximum·minimum membrane thickness difference (µm) of the trapping layer".

### [Pressure loss reduction rate (%)]

PM was deposited in the (clean) honeycomb filter where no PM was deposited in such a manner that the PM amount per 1L of the honeycomb filter was 4g. Into the honeycomb filter, air at 200°C was allowed to flow at a flow rate of 2.4 Nm³/min. The difference in pressure between the upstream and the downstream of the honeycomb filter was measured by the use of a differential pressure gauge, and the measured value was defined as the pressure loss A. Using the measured pressure loss, the "pressure loss reduction rate (%)" was obtained by the following formula (1).

### [Formula 1]

Pressure loss reduction rate (%) = (pressure loss A₀ - pressure loss A) / pressure loss A₀ (1)

In the above formula (1), the pressure loss A₀ is pressure loss obtained by the use of a honeycomb filter with no trapping layer formed therein (honeycomb filter of Comparative Example 1).

### [Judgment]

The case satisfying all the following conditions 1 to 3 was judged as "good", the case satisfying two conditions was judged as "fair", and the case satisfying one or no condition was judged as "bad".
Condition 1: The average membrane thickness of the trapping layer is 70 µm or less.
Condition 2: The maximum·minimum membrane thickness difference of the trapping layer is 40µm or less.
Condition 3: The pressure loss reduction rate is 33% or more.

### (Example 1)

To 100 mass parts of the framework particles where a SiC powder and a metal Si powder were mixed together at a mass ratio of 80 : 20 were added 6 mass parts of hydroxypropoxyl methyl cellulose as the organic binder, 5 mass parts of starch particles having an average particle diameter of 25 µm, and 35 mass parts of water as the dispersant, and they were kneaded to prepare kneaded clay. Next, the kneaded clay was subjected to extrusion forming using a die having a predetermined slit width where cells having an octagonal cross-sectional shape (inflow cells) and cells having a quadrangular cross-sectional shape (outflow cells) are alternately formed to obtain a honeycomb formed article having a desired size.

Next, the honeycomb formed article was dried with a microwave drier and then completely dried with a hot air drier. Then, a mask was applied on the inflow side end face of the outflow cells of the honeycomb formed article, and the end portion on the side where the mask was applied (inflow end portion) was immersed in the plugging material slurry containing the aforementioned forming raw material for the honeycomb formed article to form plugging portions in the inflow end portions of the outflow cells. In the same manner, the plugging portions were formed in the outflow end portions of the inflow cells.

A honeycomb formed article where plugging portions are alternately formed in both the end portions was dried with a hot air drier and then calcined at 550°C for about 3 hours in an oxidation atmosphere. Next, it was fired at 1450°C for 2 hours in an Ar inert atmosphere. Thus, there was manufactured a quadrangular prism shaped honeycomb-shaped substrate having a length of 152 mm and a end face side length of 36 mm with a cell density of 46.5 cells/cm², a partition wall thickness of 0.25 mm, an octagonal cross-sectional shape of the inflow cells (the distance (length) between facing partition walls was 1.41mm), a quadrangular cross-sectional shape of the outflow cells (the distance (length of one side) between facing partition walls was 1.01mm), an average pore diameter of 14 µm, and a porosity of 41%.

From the inflow end portion of the honeycomb-shaped substrate manufactured above, carbon black particles having a number average particle diameter of 0. 01 µm as the plugging material particles were injected so that the deposition amount per 1L of the honeycomb-shaped substrate might become 1g.

Next, membrane-forming particles were injected in the same manner as the injection of the plugging material particles. Incidentally, as the membrane-forming particles, a SiC powder having a number average particle diameter of 3 µm was used. Then, the plugging material particles were burnt away by a thermal treatment at 800°C for 2 hours in an ambient atmosphere to manufacture a honeycomb filter of Example 1.

As results of various evaluations on the honeycomb filter of Example 1, the average membrane thickness of the trapping layer was 40 µm, the maximum minimum membrane thickness difference was 30 µm, the pressure loss reduction rate was 34%, and therefore the judgment was "good". There results are shown in Table 1.

### (Comparative Examples 1 and 2)

Each of the honeycomb filters was manufactured in the same manner as in Example 1 except that neither a plugging material particle nor a membrane-forming particle was disposed in Comparative Example 1 and that no plugging material particle was disposed in Comparative Example 2. The results of various evaluations on each of the filters are shown in Table 1.

### (Examples 2 to 10, Comparative Examples 3 and 4)

Each of the honeycomb filters was manufactured in the same manner as in Example 1 except that the kinds and the number average particle diameters of the plugging material particles shown in Table 1 were employed. That is, each of the honeycomb filters were manufactured by the use of carbon black particles having a number average particle diameter of 0.05 µm in Example 2, carbon black particles having a number average particle diameter of 0.10 µm in Example 3, carbon black particles having a number average particle diameter of 0.14 µm in Example 4, acryl microparticles having a number average particle diameter of 0.60 µm in Example 5, acryl microparticles having a number average particle diameter of 1.4 µm in Example 6, acryl microparticles having a number average particle diameter of 2.6 µm in Example 7, starch particles having a number average particle diameter of 3.0 µm in Example 8, graphite powder particles having a number average particle diameter of 7.0 µm in Example 9, graphite powder particles having a number average particle diameter of 10 µm in Example 10, graphite powder particles having a number average particle diameter of 20 µm in Comparative Example 3, and starch particles having a number average particle diameter of 30 µm in Comparative Example 4. The results of various evaluations on each of the honeycomb filters are shown in Table 1.

**Table 1**

| | Plugging material particle | | | | Membrane-forming particle | | Evaluation result | | | Judgment |
|---|---|---|---|---|---|---|---|---|---|---|
| | Number average particle diameter (µm) | Number average particle diameter/ Number average pore size of partition wall (times) | Material | Injection Amount (g/L) | Material | Number average particle diameter (µm) | Average membrane thickness (µm) | Maximum-minimum membrane thickness difference (µm) | Pressure loss reduction rate (%) | |
| Comp. Ex.1 | - | - | - | - | - | - | - | - | 0 | Bad |
| Comp. Ex.2 | - | - | - | - | SiC | 3 | 60 | 50 | 30 | Bad |
| Example 1 | 0.01 | 0.0007 | CBP | 1 | SiC | 3 | 40 | 30 | 34 | Good |
| Example 2 | 0.05 | 0.0036 | CBP | 1 | SiC | 3 | 40 | 30 | 34 | Good |
| Example 3 | 0.10 | 0.0070 | CBP | 1 | SiC | 3 | 40 | 25 | 35 | Good |
| Example 4 | 0.14 | 0.010 | CBP | 1 | SiC | 3 | 40 | 25 | 35 | Good |
| Example 5 | 0.80 | 0.043 | AMP | 1 | SiC | 3 | 40 | 25 | 35 | Good |
| Example 6 | 1.4 | 0.10 | AMP | 1 | SiC | 3 | 40 | 20 | 35 | Good |
| Example 7 | 2.6 | 0.19 | AMP | 1 | SiC | 3 | 40 | 20 | 35 | Good |
| Example 8 | 3.0 | 0.21 | SP | 1 | SiC | 3 | 55 | 20 | 35 | Good |
| Example 9 | 7.0 | 0.50 | GPP | 1 | SiC | 3 | 50 | 25 | 34 | Good |
| Example 10 | 10 | 0.71 | GPP | 1 | SiC | 3 | 55 | 25 | 32 | Fair |
| Comp. Ex. 3 | 20 | 1.4 | GPP | 1 | SiC | 3 | Membrane exfoliation | Membrane exfoliation | 31 | Bad |
| Comp. Ex. 4 | 30 | 2.1 | SP | 1 | SiC | 3 | Membrane exfoliation | Membrane exfoliation | 31 | Bad |

| | | | | | | | | | | |
|---|---|---|---|---|---|---|---|---|---|---|
| Note: CBP: carbon black particle, AMP: acryl microparticle, SP: starch particle, GPP: graphite powder particle | | | | | | | | | | |

### (Examples 11 and 12)

Each of the honeycomb filters was manufactured in the same manner as in Example 3 except that cordierite forming raw material was used in Example 11 and that aluminum titanate raw material was used in Example 12 as the raw material for the honeycomb-shaped substrate and the membrane-forming particles. The results of various evaluations on each of the honeycomb filters are shown in Table 2.

**Table 2**

| | Plugging material particle | | | | Membrane-forming particle | | Evaluation result | | | Judgment |
|---|---|---|---|---|---|---|---|---|---|---|
| | Number average particle diameter (µm) | Number average particle diameter/ Number average pore size of partition wall (times) | Material | Injection Amount (g/L) | Material | Number average particle diameter | Average membrane thickness (µm) | Maximum· minimum membrane thickness difference (µ) | Pressure loss reduction rate (%) | |
| Example 3 | 0.10 | 0.0070 | CBP | 1 | SiC | 3 | 40 | 25 | 35 | Good |
| Example 11 | 0.10 | 0.0070 | CBP | 1 | Cordierite | 3 | 40 | 25 | 35 | Good |
| Example 12 | 0.10 | 0.0070 | CBP | 1 | Aluminum titanate | 3 | 40 | 25 | 35 | Good |

| | | | | | | | | | | |
|---|---|---|---|---|---|---|---|---|---|---|
| Note: CBP: carbon black particle | | | | | | | | | | |

From Tables 1 and 2, it is clear that a honeycomb filter obtained by forming a trapping layer on the surfaces of the partition walls which are made almost flat by the use of plugging material particles having a number average particle diameter not larger than the average pore size of the pores formed in the partition walls and then burning away the plugging material particles is provided with a thin and uniform trapping layer. Further, it is clear that, in the case of using plugging material particles having a number average particle of at most 0.50 times the average pore size of the pores formed in the partition walls, the honeycomb filter is provided with a thin and uniform trapping layer and has high pressure loss reduction rate.

A honeycomb filter of the present invention can suitably be used as a filter for trapping and removing particulate matter contained in exhaust gas discharged from internal combustion engines such as a vehicle engine, a construction machine engine, and an industrial machine stationary engine, other burning appliances, and the like.

## Claims

1. A method for manufacturing a honeycomb filter, the method comprising:
a first step of plugging openings of pores of a honeycomb-shaped substrate having porous partition walls separating and forming a plurality of cells functioning as exhaust gas fluid passages and having a large number of pores formed therein, and plugging portions disposed in end portions on one side of exhaust gas inflow cells among the cells and in end portions on the other side of exhaust gas outflow cells adjacent to the inflow cells by allowing first particles which burn away due to a thermal treatment to deposit in at least the pores open on the inflow cell side,
a second step of allowing second particles for manufacturing a membrane to deposit on the partition walls where the opening of the pores are plugged, and
a third step of subjecting the honeycomb-shaped substrate having the first and second particles depositing on the partition walls thereof to a thermal treatment;
wherein a number average particle diameter of the first particles is at most an average pore size of the pores formed in the partition walls.

2. The method for manufacturing a honeycomb filter according to Claim 1, wherein the number average particle diameter of the first particles is at most 0. 50 times the average pore size of the pores formed in the partition walls.

3. The method for manufacturing a honeycomb filter according to Claim 1, wherein the number average particle diameter of the first particles is 0.0007 to 0.50 times the average pore size of the pores formed in the partition walls.

## Patentansprüche

1. Verfahren zur Herstellung eines Wabenfilters, wobei das Verfahren Folgendes umfasst:
als ersten Schritt das Verschließen von Porenöffnungen auf einem wabenförmigen Substrat, das poröse Trennwände aufweist, die eine Vielzahl von Zellen trennen und ausbilden, die als Abgasfluiddurchlässe fungieren und eine große Zahl an darin ausgebildeten Poren aufweisen, und das Verschlussabschnitte aufweist, die in Endabschnitten an einer Seite von Abgaseinströmungszellen unter den Zellen und in Endabschnitten an der anderen Seite von Abgasausströmungszellen angeordnet sind, die benachbart zu den Einströmungszellen liegen, indem ersten Partikeln, die aufgrund einer thermischen Behandlung wegbrennen, ermöglicht wird, sich zumindest in den auf der Seite der Einströmungszellen offenen Poren abzulagern,
als zweiten Schritt, zu ermöglichen, dass zweite Partikel zur Herstellung einer Membran sich an den Trennwänden ablagern, wo die Öffnung der Poren verschlossen ist, und
als dritten Schritt eine thermische Behandlung des wabenförmigen Substrats, auf dessen Trennwänden die ersten und zweiten Partikel abgelagert sind;
worin ein zahlengemittelter Partikeldurchmesser der ersten Partikel höchstens gleich einer durchschnittlichen Porengröße der in den Trennwänden ausgebildeten Porengröße ist.

2. Verfahren zur Herstellung eines Wabenfilters nach Anspruch 1, worin der zahlengemittelte Partikeldurchmesser der ersten Partikel höchstens 0,50 Mal so groß ist wie die durchschnittliche Porengröße der in den Trennwänden ausgebildeten Poren.

3. Verfahren zur Herstellung eines Wabenfilter nach Anspruch 1, worin der zahlengemittelte Partikeldurchmesser der ersten Partikel 0,0007 bis 0,50 Mal so groß ist wie die durchschnittliche Porengröße der in den Trennwänden ausgebildeten Poren.

## Revendications

1. Procédé de fabrication d'un filtre en nid d'abeilles, le procédé comprenant :
une première étape consistant à obturer des ouvertures des pores d'un substrat en forme de nid d'abeilles comportant des parois de séparation poreuses séparant et formant une pluralité de cellules fonctionnant en tant que passages de fluide gazeux d'échappement et comportant un grand nombre de pores formés dans celles-ci, et à obturer des parties disposées dans les parties d'extrémité d'un côté des cellules d'entrée de gaz d'échappement parmi les cellules et dans les parties d'extrémité de l'autre côté des cellules de sortie de gaz d'échappement adjacentes aux cellules d'entrée en permettant à des premières particules qui se consument du fait d'un traitement thermique de se déposer au moins dans les pores ouverts du côté des cellules d'entrée,
une deuxième étape consistant à permettre à des deuxièmes particules pour fabriquer une membrane à se déposer sur les parois de séparation où les ouvertures des pores sont obturées, et
une troisième étape consistant à soumettre le substrat en forme de nid d'abeilles sur les parois de séparation duquel les premières et deuxièmes particules se déposent à un traitement thermique ;
dans lequel un diamètre de particule moyen en nombre des premières particules est au plus égal à une taille de pore moyenne des pores formés dans les parois de séparation.

2. Procédé de fabrication d'un filtre en nid d'abeilles selon la revendication 1, dans lequel le diamètre de particule moyen en nombre des premières particules est au plus égal à 0,50 fois la taille de pore moyenne des pores formés dans les parois de séparation.

3. Procédé de fabrication d'un filtre en nid d'abeilles selon la revendication 1, dans lequel le diamètre de particule moyen en nombre des premières particules est égal à 0,0007 à 0,50 fois la taille de pore moyenne des pores formés dans les parois de séparation.
